# EUROPEAN PATENT SPECIFICATION

(11) **EP 2 732 601 B1**
(45) Date of publication and mention of the grant of the patent: **03.02.2016**
(21) Application number: 11802525.3
(22) Date of filing: 02.11.2011
(51) Int. Cl.: H04L 29/08

(54) **OPTIMIZATION ENGINE IN A MOBILE CLOUD ACCELERATOR AND RELATED METHODS**
OPTIMIERUNGSMASCHINE IN EINEM MOBILEN CLOUD-BESCHLEUNIGER UND ZUGEHÖRIGE VERFAHREN
MOTEUR D'OPTIMISATION DANS UN ACCÉLÉRATEUR DE CLOUD MOBILE ET PROCÉDÉS CONNEXES

(30) Priority: 14.07.2011 US 201161507761 P
(43) Date of publication of application: 21.05.2014
(73) Proprietor: Telefonaktiebolaget LM Ericsson (PUBL), 164 83 Stockholm (SE)
(72) Inventor: DAMOLA, Ayodele, 169 59 Solna (SE); SVANBRO, Krister, 192 48 sollentuna (SE); WILLARS, Per, 185 94 Vaxholm (SE)
(74) Representative: Ericsson
(86) International application number: PCT/IB2011/002598
(87) International publication number: WO 2013/008054

(56) References cited:
- WO-A1-2010/140938
- GOS: "Managing the Mobile Bandwidth Explosion", , 7 February 2011 (2011-02-07), XP002672666, Retrieved from the Internet: URL:http://www.gosnetworks.com/products/do cumentation [retrieved on 2012-03-28]

## Description

### RELATED APPLICATION

This application is related to, and claims priority from, U.S. Provisional Patent Application Serial No. 61/507,761 entitled "MCA Optimization Engine and Related Methods", filed on July 14, 2011.

### TECHNICAL FIELD

Embodiments of the present invention includes apparatuses, methods and software that control content delivery from a content provider to a user equipment (UE) in a telecommunication network, such as to achieve a multi-dimensional optimization by taking into consideration various factors, such as, user abandonment of using the content before all content is transferred, network utilization related to the time of day, network signaling related to the manner of delivering the content, network load, content provider preferences, user's quality of experience (QoE), user preferences, UE's energy consumption, etc.

### BACKGROUND

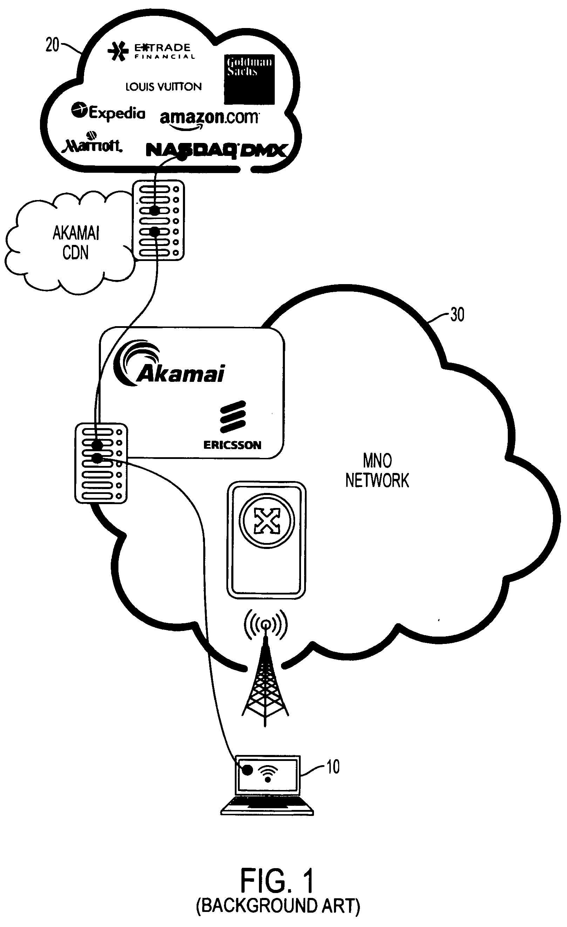

Mobile and fixed user equipment (UEs) are capable to playout media content from various sources in a telecommunication network. A variety of hardware and software generically named mobile cloud accelerator (MCA) concur in making possible to deliver content to users more promptly, efficiently and seamlessly than when a source server caters directly to the UE. For example, as illustrated in Figure 1, a UE 10 (which can be a mobile or a fixed terminal) receives multimedia input from content provider 20, via MCA 30. Within the MCA 30, the actual delivery of the content to the UE 10 may be controlled by the Mobile Network Operator (MNO) and be subjected various mechanisms like radio prioritization, proxy caching using Akamai type content delivery network (CDN), transparent internet cache (TIC), etc.

However, the conventional content delivery systems and methods fail to address several aspects, for example, to optimize resource (e.g., bandwidth, UE's battery) usage by taking into consideration the type of content to be delivered or the user abandonment rate and network signaling load.

Accordingly, it would be desirable to provide more efficient apparatuses, methods and devices that achieve a multi-dimensional optimization of resources in delivering content from a content provider to a user.

### SUMMARY

An object of the invention is to provide apparatuses having at least one processor and configured to select a scenario to be used for content delivery from a source proxy to a UE in a mobile network, while taking into consideration one or more of the user drop-out rate, the mobile network efficiency, the terminal efficiency, the end user requirements and the content provider requirements. Parameters of the scenario to be used for the content delivery are determined depending on the nature of the content, and the scenario may include a mechanism, such as (but not limited to), video pacing, content deferral, de-prioritization, and TCP acceleration, to be used during delivery of the content to the UE. The embodiments cause at least one of a decrease in energy consumption for the battery of the UE, a decrease in waste of network bandwidth when delivering content that is not being used due to user abandonment, and avoiding overloading of the network when the load is high occasionally or due to the time of the day.

Another object is to provide methods employed in controlling a content delivery from a source proxy towards a UE in a mobile network, which methods perform determining a manner in which multimedia content is delivered while taking into consideration one or more of the user drop-out rate, the mobile network efficiency, the terminal efficiency, the end user requirements and the content provider requirements. The methods may include outputting parameters to be used for the content delivery according to different scenarios depending on the nature of the content, and selecting a mechanism such as (but not limited to) video pacing, content deferral de-prioritization, and TCP acceleration, to be used relative in delivering the content to the UE.

In other words, embodiments of the current inventive concept achieve a multi-dimensional optimization of a content delivery service towards UEs. One or more of the embodiments advantageously provides a reduced traffic load in the network, and more optimal use of UEs, for example, by saving power thereof.

According to an exemplary embodiment, an apparatus is configured to control delivering content from a content source provider to a content user (UE) in a telecommunication network. The apparatus includes a processing unit configured to select a scenario from a plurality of possible scenarios, for delivering the content to the content user, depending on one or more factors including a viewer abandonment rate, and to deliver the content according to the selected scenario.

According to another exemplary embodiment, a method for controlling content delivery from a content source provider to a content user (UE) in a telecommunication network includes: (A) receiving and storing content to be delivered to the content user from the content source provider; (B) selecting a scenario from a plurality of possible scenarios, for delivering the content to the content user, the scenario being selected depending on one or more factors including a viewer abandonment rate, and (C) delivering the content to the content user according to the selected scenario.

According to yet another exemplary embodiment, a computer readable medium stores executable codes which, when executed on a processor, make the processor to perform a method for controlling content delivery from a content source provider to a content user (UE) in a telecommunication network. The method includes (A) selecting a scenario from a plurality of possible scenarios, for delivering the content to the content user, the scenario being selected depending on one or more factors including a viewer abandonment rate, and (B) delivering the content to the content user according to the selected scenario.

The apparatuses, methods and software that control content delivery from a content provider to a user equipment (UE) in a telecommunication network, achieve a multi-dimensional optimization and provide advantages in saving network resources (e.g., bandwidth wasted by transferring content that is subsequently abandoned by the user), avoiding network overload, saving battery energy, and ultimately providing a better experience to individual users and overall across the telecommunication network.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional content delivery system;
Figure 2 is graph illustrating power levels associated with different radio states;
Figure 3 is a graph illustrating data transfer characteristics versus power consumption and transitions between different radio states, according to an exemplary embodiment;
Figure 4 is a graph illustrating abandonment rate relative to viewing time, according to an exemplary embodiment;
Figure 5 is a graph illustrating network usage during a day, according to an exemplary embodiment;
Figure 6 is a multimedia content delivery system according to an exemplary embodiment;
Figure 7 is a graphic illustration of the factors input to an optimization engine according to an exemplary embodiment;
Figure 8 is a table of parameters establishes for different scenarios, according to an exemplary embodiment;
Figure 9 is a schematic diagram of an optimization engine according to an exemplary embodiment;
Figure 10 is a graph illustrating is a graph illustrating different manners of delivering video content;
Figure 11 is a video pacing example according to an exemplary embodiment;
Figure 12A and 12B graphically illustrate different possible strategies of using UE battery according to exemplary embodiments;
Figure 13 illustrates the effect of user abandonment depending on the manner of pacing video according to exemplary embodiments;
Figure 14 is a content deferral example according to an exemplary embodiment;
Figure 15 is a de-prioritization example according to an exemplary embodiment;
Figure 16 is a schematic diagram of an apparatus according to an exemplary embodiment;
Figure 17 is a flow diagram of a method according to an exemplary embodiment; and
Figure 18 is a flow diagram of a method according to another exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a content delivery system, for example, a system meeting the characteristics described in the current 3GPP documentation. However, the embodiments to be discussed next are not limited to these systems but may be applied to other existing content delivery systems, such as but not limited to WIFI systems.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification is not necessarily all referring to the same embodiment. Further, the particular features, structures or characteristics may be combined in any suitable manner in one or more embodiments.

A user equipment connected to a telecommunication network may receive data (content) at different predetermined data rates, in different respective states. The power used by the user equipment is not proportional with the received data rate, although a higher data rate is associated with a higher power. The lack of proportionality makes the energy consumption be dependent on the scenario used for delivering the content. A scenario is a sequence of one or more time periods, during each time period the content being delivered with the same one of possible data rates.

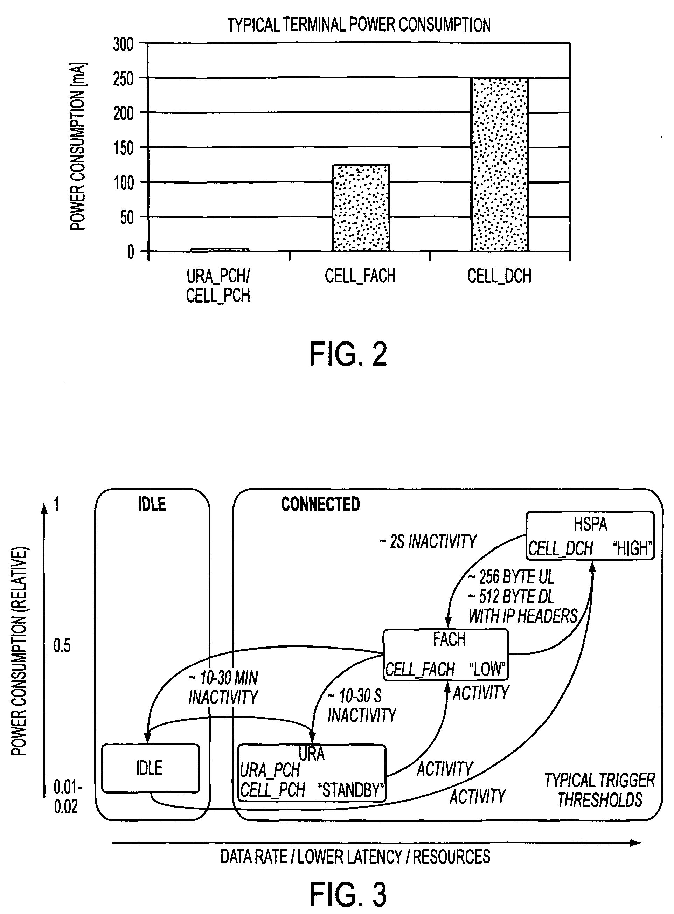

For the purpose of illustration and not of limitation, a UE may be in one of four WCDMA radio states (as described, for example, in the 2011 edition of "WCDMA for UMTS: HSPA Evolution and LTE" by Harri Holma, Antti Toskala): a high state (when a Dedicated CHannel - DCH - is used), a low state (when a Forward Access Channel - FACH - is used), a standby state (when only a Paging Channel - PCH - may be used to access the UTRAN Registration Area - URA) and an idle state (when the UE is not connected to the network). As illustrated in Figure 2, in the "high" state, the current used is 250 mA, in "low" state, the current used is 120 mA, while in the "standby" and "idle" states the current used is practically zero. Thus, in different states a different amount of power is required from the UE battery.

Not only the data rates and the power are different for different states, but also the latency, signaling and other resource usage may be different for different states, as illustrated on x-axis of Figure 3. Transition between states (also illustrated in Figure 3) occurs depending on whether data transfer activity is maintained (e.g., transitions to lower states occur after predetermined time intervals with no activity elapse while the UE is in higher power states), and on the ongoing application sessions. On y-axis of Figure 3, it is represented relative power consumption (1 corresponding to a maximum) for different states.

In a more general approach, embodiments operate relative to radio states that include a first state during which the content user receives the content at a first data rate and uses a first battery power, and a second state during which the content user receives the content at a second data rate and uses a second battery power, the first data rate being larger than the second data rate, and the first battery power being larger than the second battery power.

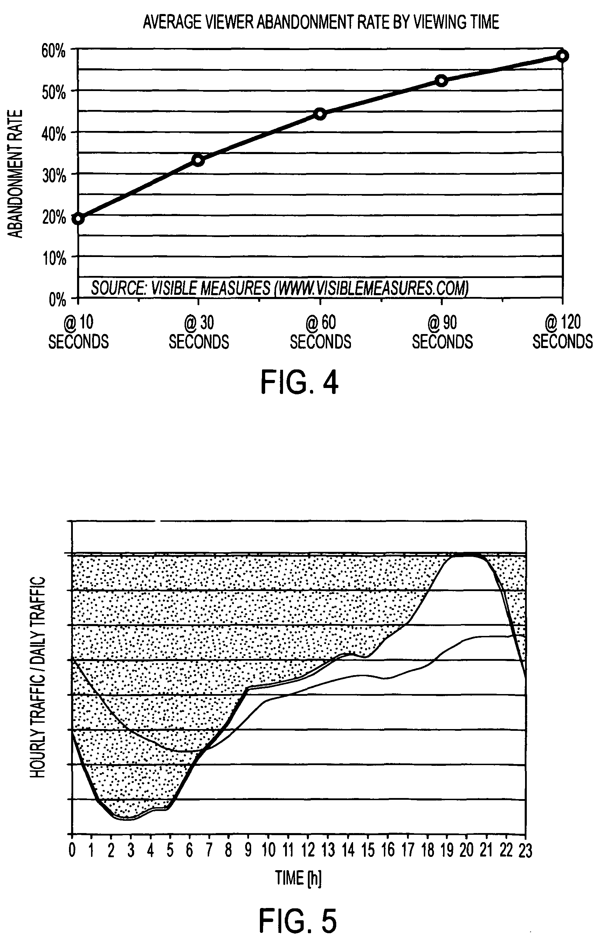

Studies have shown that users frequently abandon data transfer after partial viewing. For example, when video is streamed (e.g., from a service such as YouTube), users often view just the first few seconds of a video clip until they decide that they are not going to continue watching it. Figure 4 is a graph illustrating the correlation between the abandonment rate (on y-axis) and the viewed time (on x-axis). The benchmark initial abandonment rate of 19.4% is nearly double previously reported industry figures. Further, the rate of viewer abandonment increases along a relatively predictable trajectory: 33.4% abandonment at 30 seconds of playback; 44.1% abandonment at 60 seconds; 52.5% at 90 seconds; and 58.5% at 120 seconds. Rushing to deliver the whole content (e.g., video clip) at the highest speed yields a waste of bandwidth in the system and of energy consumption at the user equipment.

It is also well known that the mobile networks are utilized un-evenly over a 24-hour period (day). During the peak hours, approximately between 17:00-22:00 of a day, the networks are most utilized. In contrast, during the off-peak hours, approximately between 01:00-06:00 of the day, the networks are least utilized. Figure 5 illustrates network utilization (shown in arbitrary units on the y-axis) depending on the hour during a day (on the x-axis). If content to be delivered is such as delivery may be delayed (e.g., a software update), it would be useful to defer delivery for the off-peak hours.

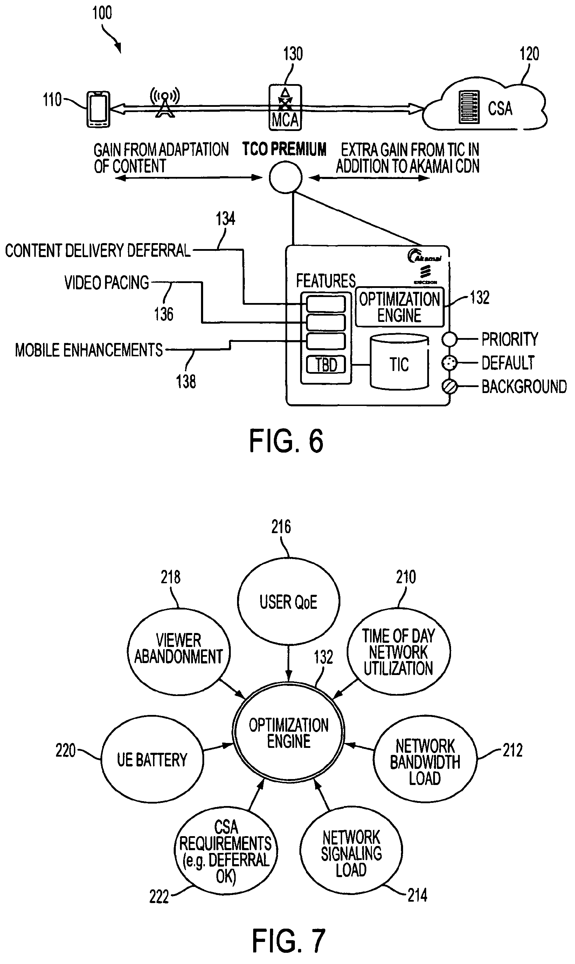

According to an exemplary embodiment illustrated in Figure 6, a system 100 is configured to provide multimedia content to a UE 110, from Content Service Applications (CSA) 120 via a media content accelerator (MCA) 130. The MCA 130, which may be a combination of hardware and software, and may reside on plural nodes (the MCA consists of at least two nodes, a DPI node and a cache server) is configured to optimize content delivery between the CSA 120 and UE110, for example, by using a proxy (such as, an Akamai CDN) and transparent internet cache (TIC). The MCA 130 is configured to control content delivery to multiple users, by allocating resources according to priorities, outputting parameters to be used for each content delivery according to different scenarios depending on the nature of the content, and/or using mechanisms, such as (but not limited to), video pacing, content deferral, de-prioritization, and TCP acceleration.

The MCA 130 includes an optimization engine 132 (i.e., a processing unit having at least one processor), which makes it possible to implement (besides the conventional MCA functionality of CDN and prioritization) additional features, such as, content delivery deferral 134, video pacing 136, mobile use enhancement 138, etc. These additional functions are provided by the optimization engine 132 using information related to characteristics of the requested content delivery (e.g., playout rate), the current status of the network, and the UE's capacity, which may be considered to be ownership information. The additional functions constitute a Total Cost of Ownership (TCO) premium.

The information (factors) that may be received as input by the optimization engine 132 (as illustrated in Figure 7) may pertain to different categories. Figure 7 does not illustrate all the factors and none of the factors illustrated are a necessary input; in fact, any one input and any combination of inputs may be used for different embodiments. For purposes of illustration and not of limitation, a category may be inputs to the optimization engine 132 that may be provided by a Mobile Network Operator (MNO): the time of the day network utilization 210, the network bandwidth load 212 and the network signaling load 214. Another category related to the user's experience may include the User Quality of Experience (QoE) 216, and another category related to the user's behavior may include the viewer abandonment 218. A UE requirements category may include the capacity and usage of the UE battery 220. The CSA requirements 222 may be a factor (and a category) that indicates user's preference as to whether deferral is admissible.

These factors are input to the optimization engine and corresponding parameter values characterizing a scenario are output by the optimization engine 132. In other words, the optimization engine 132 selects or determines a scenario from all possible scenarios. The type of scenario that is selected depends also on the type of media content to be provided to the UE. For example, different sets of parameters are determined for a software update download scenario, a video streaming scenario, a social network update scenario, a rich media upload scenario or an advertisement delivery scenario. The software update may be deferred to off-peak hours, the scenario thus including an initial no-transfer period. The video streaming must be paced such as an amount of the content already delivered to the content user to exceed an amount of played-out content to avoid freezing of the video clip while viewed at the UE due to the lack of data to be played.

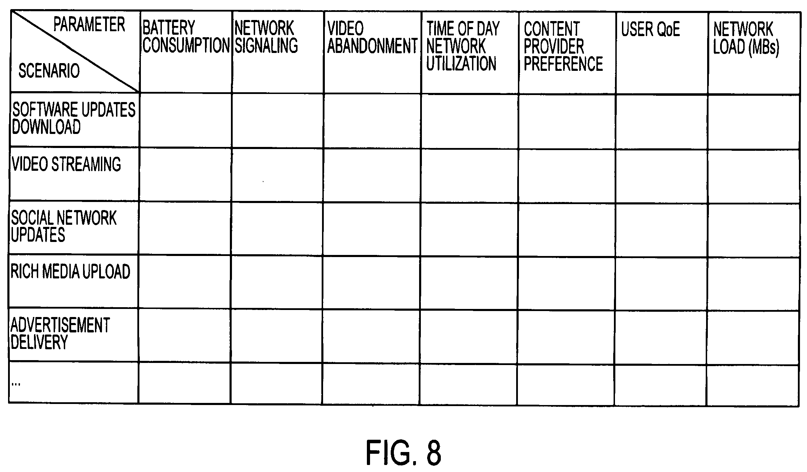

The optimization means seeking a set of parameter values corresponding to the appropriate scenario as illustrated in Figure 8. Thus, the parameters encompass network requirements, terminal requirements, user requirements and content provider requirements. The goals of the optimization for each parameter differ: the network load, the network signaling and terminal battery consumption are subject of respective minimization processes, while the user's QoE is subject of a maximization process. Some factors have fixed values acting like limitations, such as, the viewer abandonment rate, content's playout rate based on the encoding rate and network time of day utilization. When achieving one optimization goal affects achieving another optimization goal, different weights may be assigned to different optimization goals within a multi-dimensional optimization function. Alternatively, the optimizations may be performed in a predetermined order.

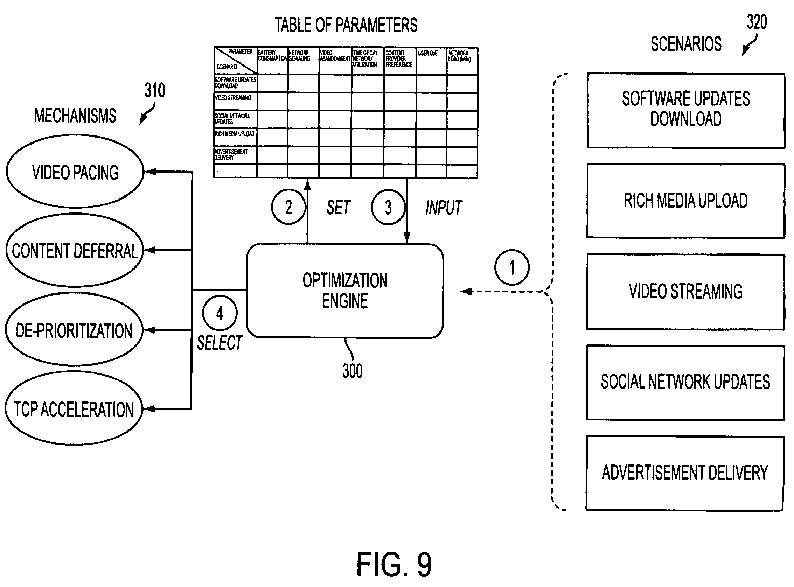

Besides establishing the parameters corresponding to a current scenario for a specific UE, the optimization engine may also select various mechanisms useable relative to delivering the content. Figure 9 illustrates operation of the optimization engine 300. The mechanisms 310 include (without being limited thereto) video pacing, content deferral, de-prioritization, and TCP acceleration. For one of the set of predetermined scenarios 320, the optimization engine 300 receives information of current values of various factors as input, determines sets of parameters, and may select one of the available mechanisms 310.

In one embodiment, when the type of content is video streaming, the optimization engine may select to use video pacing. In this case, three dimensions are given significant weight during optimization: UE battery consumption, viewer abandonment, network signaling load. Another implicit dimension is the quality of experience (QoE), the content delivery being performed such that to satisfy the requirement on having sufficient video data in the UE's buffer to ensure that a buffer under-run situation does not occur.

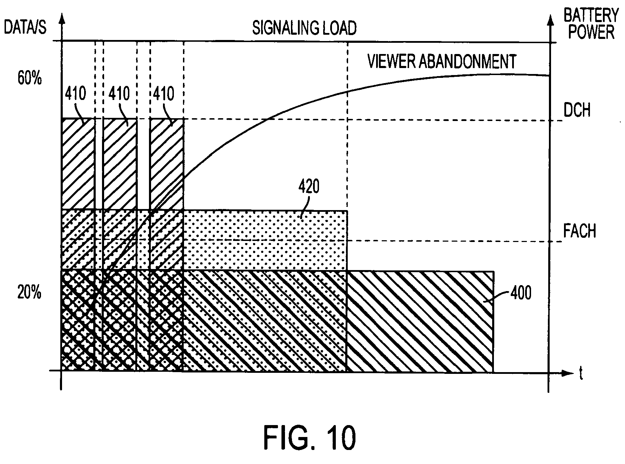

Figure 10 is a graph illustrating two different manners of delivering video content: in high rate bursts 410, and at a constant low rate 420, the delivery rate being larger than the video play-out rate 400. The left y-axis represents the probability of viewer abandonment and also transfer or usage rate levels. The right y-axis represents the radio state energy levels (which are proportional to the transfer rate) and the bottom x-axis is time during which the content is delivered or played-out. The optimization engine identifies an optimal manner of the delivering content that would simultaneously achieve: minimizing wasted resources (data transfer capacity, battery energy) if the viewer abandons the video item by spreading in time content delivery, minimizing battery energy consumption, avoiding overloading the signaling load (making lowest number necessary of radio state transitions) while maintaining the viewer's QoE.

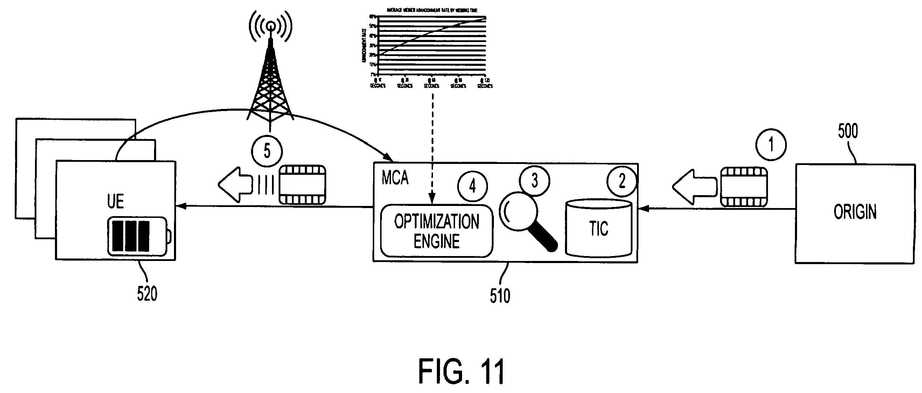

Figure 11 is a video pacing apparatus according to an exemplary embodiment:
1. Video content is streamed from a content provider 500 to a mirror (cache or proxy) location 510 irrespective of the mobile network or UE's characteristics;
2. Video content is proxied by TIC;
3. Video playout rate at UE is determined;
4. The optimization engine selects and determines the parameter of a scenario taking into account (1) viewer abandonment, (2) signaling load, and (3) battery efficiency. The optimization engine may select a video pacing mechanism or different strategies such as (a) sending at video at low energy level (FACH), and (b) varying between high (DCH) and idle modes;
5. The video content is delivered to UE 520 in a paced manner according to the selected scenario.

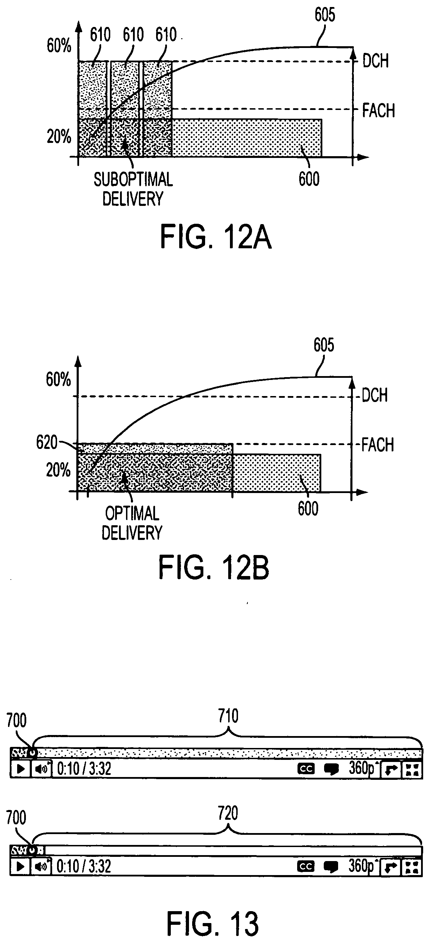

One suboptimal strategy from the point of view of using UE's battery efficiently is to deliver video content in high radio state (DCH) in periodic bursts 610 as illustrated in Figure 12A, where the rectangle 600 is represents the playing-out of the video. This strategy is suboptimal because there is a high probability of wasted bandwidth if the viewer abandons the video content, high battery consumption at least during the bursts, and high signaling load due to the numerous state transitions. Another better strategy is to deliver the video in low radio state (FACH) over a long period of time 620 illustrated in Figure 12B. When using this latter strategy the probability of wasting bandwidth decreases, the battery consumption is lower, and the signaling load is low since few state transitions occur. Line 605 in Figures 12A and 12B represents the abandonment rate. In Figure 12B, the rate of delivering the content to the UE exceeds the playout rate.

However, a pacing pattern, (i.e., a sequence including at least one high rate period besides low rate periods) is necessary if the low rate is lower than the playout rate. Every change of a radio state of the UE is accompanied by signaling between the UE and the network. Therefore an optimal pacing pattern will have as few changes of radio state as possible.

From the perspective of QoE, the user would not like to experience a frozen image or blank screen which can occur if there is a buffer under-run, i.e. not sufficient data is supplied to the video applications play-out buffer. The optimization engine addresses this aspect by ensuring that video is supplied with a transfer rate which would not allow a buffer under-run situation. This is achieved by maintaining, in the video application play-out buffer, a minimum amount of data ahead of the current play-out point. Usually, the selected transfer rate is larger than the video play-out rate as illustrated in Figure 12B. If the video transfer rate is lower than the play-out rate, the play-out buffer may be filled in the beginning of the content delivery period at a higher rate in a higher state.

Although, a minimum amount of data has to be maintained in the play-out buffer, ahead of the current play-out point, in view of the high abandonment rate, it is desirable this amount to be minimal in order to avoid wasting bandwidth and battery power for transferring data that is not going to be used. For example, as illustrated in upper part of Figure 13, if all video has been delivered at a moment 700 at which the viewer abandons viewing, the bandwidth 710 used for delivery of video that would have been play-out after the moment 700 has been wasted. However, as illustrated in lower part of Figure 13, if video delivery is minimally ahead of the play-out point, and most of the video would have been delivered after the moment 700 when the viewer abandoned viewing, bandwidth 720 that would have been used for continuing the video delivery is saved.

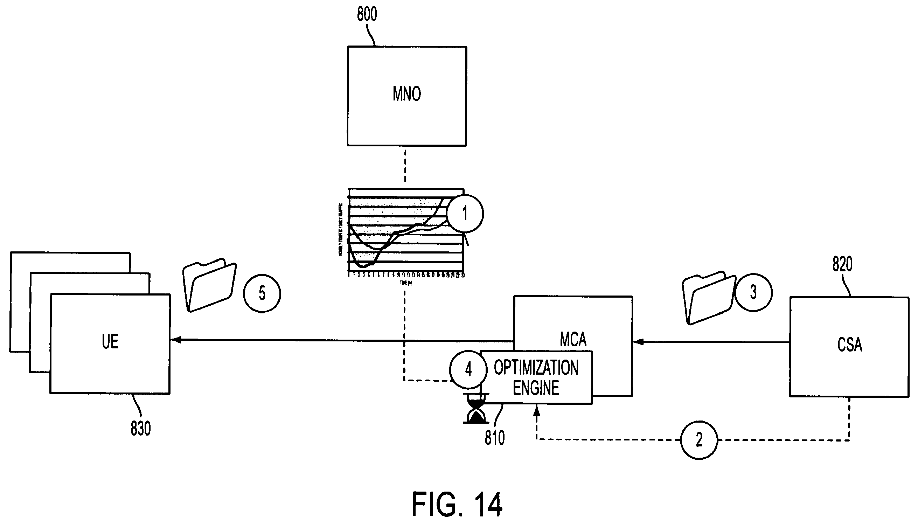

Another mechanism that may be available to the optimization engine is content deferral. Operation of the content deferral mechanism is illustrated in Figure 14:
1. MNO 800 provides MCA optimization engine 810 with the network load profile;
2. Content provider (CSA) 820 provides MCA optimization engine 810 with deferral rules;
3. CSA 820 sends bulky content (e.g., software update download) to MCA
4. The MCA optimization engine 810 decides to defer delivery of the bulky content to UE 830 based on traffic profile until a later time (e.g., off-peak hours);
5. Content is delivered to the UE 830 when scheduled (e.g., during off-peak hours).

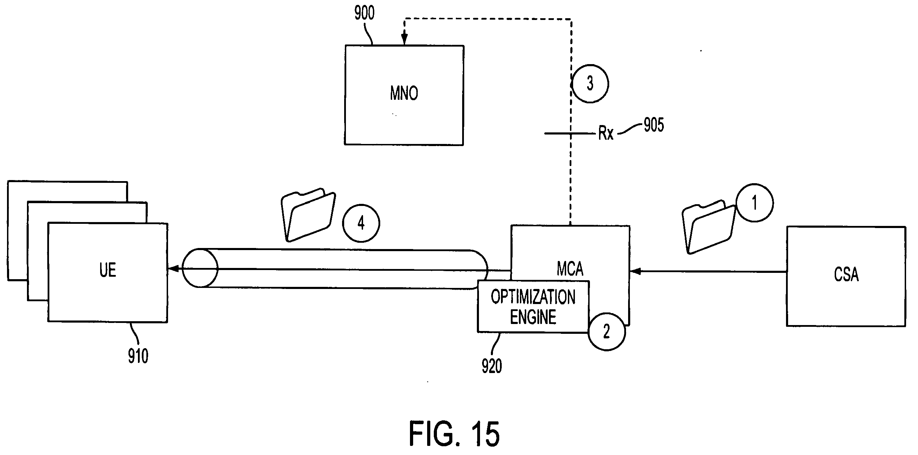

Another mechanism that may be available to the optimization engine is de-prioritization. Operation of the de-prioritization mechanism is illustrated in Figure 15:
1. MNO 900 supervises content delivery to UE 910 using a P2P interface Rx 905;
2. MCA optimization engine 920 identifies that content is bulky and based on policy makes Rx request to de-prioritize;
3. RX 905 places bulky session on low priority;
4. Bulky content is delivered to the UE 910 using a low priority bearer.

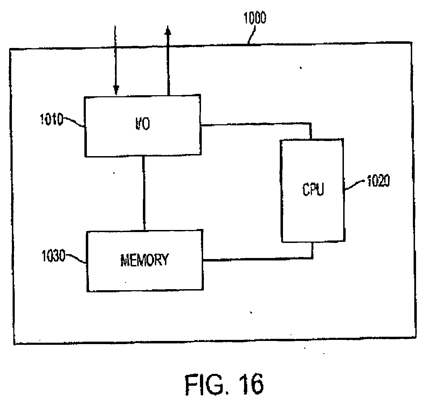

According to another exemplary embodiment an apparatus 1000 capable to perform the functionality above-described while referring to an MCA engine (i.e., to determine a manner in which multimedia content is delivered from a source proxy to a UE in a mobile network, while taking into consideration one or more of the user drop-out rate, the mobile network efficiency, the terminal efficiency, the end user requirements and the content provider requirements), may include an input/output interface 1010 and a processor 1020, as illustrated in Figure 16. The controller 1000 may further include a computer readable storage medium 1030 storing software which when executed by the processor determines the processor to provide the above-described functionality.

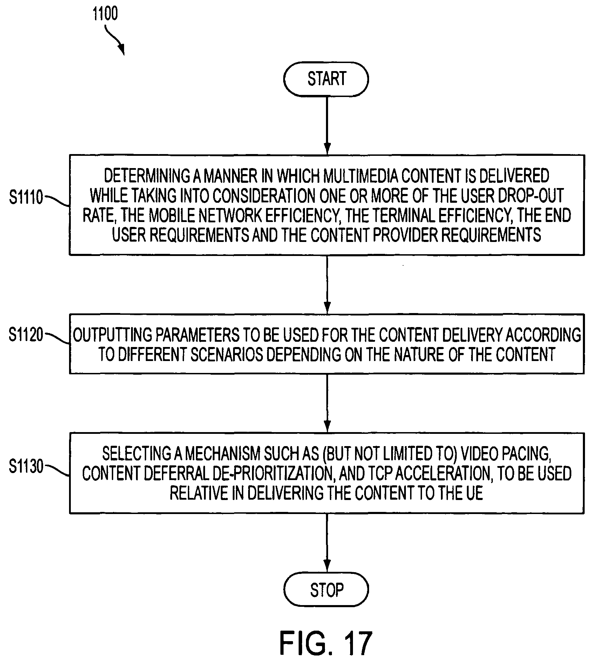

A flow diagram of a method 1100 employed in controlling a content delivery from a source proxy towards a UE in a mobile network is illustrated in Figure 17. The method 1100 includes determining a manner in which multimedia content is delivered while taking into consideration one or more of the user drop-out rate, the mobile network efficiency, the terminal efficiency, the end user requirements and the content provider requirements, at S1110. The method 1100 further includes outputting parameters to be used for the content delivery according to different scenarios depending on the nature of the content, at S1120. The method may also include selecting a mechanism such as (but not limited to) video pacing, content deferral de-prioritization, and TCP acceleration, to be used relative in delivering the content to the UE, at S1130.

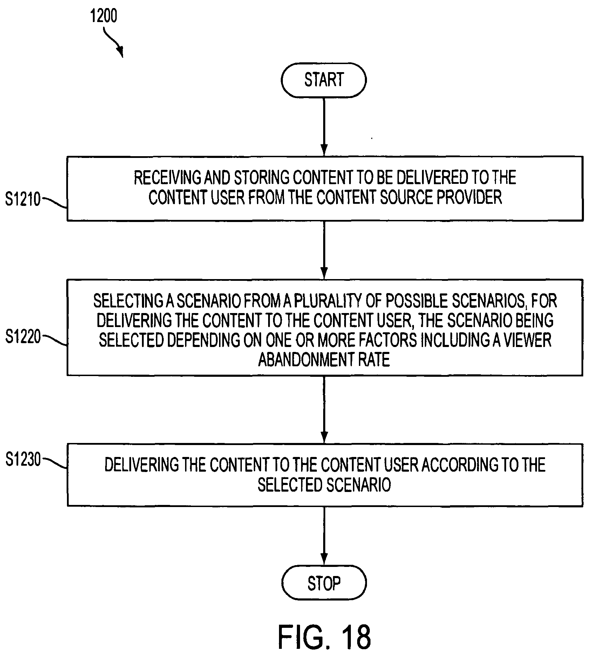

A flow diagram of a method 1200 for controlling content delivery from a content source provider to a content user (UE) in a telecommunication network is illustrated in Figure 18. The method 1200 includes receiving and storing content to be delivered to the content user from the content source provider, at S1210. Further, the method 1200 includes selecting a scenario from a plurality of possible scenarios, for delivering the content to the content user, the scenario being selected depending on one or more factors including a viewer abandonment rate, at S1220. The method 1200 also includes delivering the content to the content user according to the selected scenario, at S1230.

The disclosed exemplary embodiments provide MCA optimization engines (i.e., controllers), methods and software for determining a manner in which multimedia content is delivered from a source proxy to a UE in a mobile network, while taking into consideration one or more of the user drop-out rate, the mobile network efficiency, the terminal efficiency, the end user requirements and the content provider requirements. It should be understood that this description is not intended to limit the invention. On the contrary, the exemplary embodiments are intended to cover alternatives, modifications and equivalents, which are included in the spirit and scope of the invention. Further, in the detailed description of the exemplary embodiments, numerous specific details are set forth in order to provide a comprehensive understanding of the inventive concept. However, one skilled in the art would understand that various embodiments may be practiced without such specific details.

The exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer readable medium may be utilized including hard disks, CD-ROMs, digital versatile disc (DVD), optical storage devices, or magnetic storage devices such a floppy disk or magnetic tape. Other non-limiting examples of computer readable media include flash-type memories or other known memories.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a specifically programmed computer or processor.

## Claims

1. An apparatus (130, 510, 1000) configured to control delivering content from a content source provider to a content user (UE) in a telecommunication network, comprising:
a processing unit (132, 300, 810, 920, 1020) configured to select a scenario from a plurality of possible scenarios, for delivering the content to the content user, depending on factors including a viewer abandonment rate, and to deliver the content according to the selected scenario.

2. The apparatus of claim 1, further comprising:
a data storage unit (TIC) configured to store the content received from the content source provider to be delivered to the content user according to the selected scenario.

3. The apparatus of claim 1, wherein the factors further include at least one of (A) a time of day, (B) a UE's battery energy consumption associated with each of the possible scenarios, (C) an amount of network signaling associated with each of the possible scenarios, (D) preferences of the content provider, (E) preferences of the content user, (F) a type of the content to be delivered, and (G) a current network load.

4. The apparatus of claim 1, wherein
the type of content is one of a plurality of types including software updates, video or audio streaming, social network updates, rich media upload, and advertisement delivery, and
some of the plurality of possible scenarios include using one or more mechanisms such as video pacing, content deferral, de-prioritization and TCP acceleration.

5. The apparatus of claim 4, wherein the processing unit is further configured to select the scenario to use video pacing, if the type of content is video or audio streaming, and the scenario to be such as while delivering the content, an amount of the content already delivered to the content user to exceed an amount of the content that has been played-out by the content user.

6. The apparatus of claim 5, wherein
the radio states include a first state during which the content user receives the content at a first data rate and uses a first battery power, and a second state during which the content user receives the content at a second data rate and uses a second battery power, the first data rate being larger than the second data rate, and the first battery power being larger than the second battery power, and
the processing unit is further configured to deliver the content using the first state and the second state such as to minimize energy consumption.

7. The apparatus of claim 4, wherein the processing unit is configured to delay delivering the content if the selected scenario includes the content deferral.

8. The apparatus of claim 7, wherein the processing unit is configured to select the scenario that includes the content deferral according to a predetermined set of rules.

9. The apparatus of claim 7, wherein the processing unit is configured to select the scenario that includes the content deferral if at least one of the following conditions is met:
a size of the content exceeds a predetermined size threshold,
a current network load including mobile cell load exceeds a predetermined network load threshold, and
current time corresponds to a period of a day when a network usage is high.

10. The apparatus of claim 7, wherein the processing unit is further configured to receive a network load profile, and to select the scenario that includes the content deferral if the network profile indicates that a current network load is high and is expected to decrease.

11. The apparatus of claim 4, wherein if the selected scenario includes the de-prioritization, a low priority is assigned to delivering the content.

12. The apparatus of claim 11, wherein the processing unit is configured to select a scenario including the de-prioritization if a size of the content exceeds a predetermined size threshold.

13. A method (1200) for controlling content delivery from a content source provider to a content user (UE) in a telecommunication network, comprising:
receiving and storing (1210) content to be delivered to the content user from the content source provider;
selecting (1220) a scenario from a plurality of possible scenarios, for delivering the content to the content user, the scenario being selected depending on factors including a viewer abandonment rate; and
delivering (1230) the content to the content user according to the selected scenario.

14. The method of claim 13, wherein the factors further include at least one of (A) a time of day, (B) a UE's battery energy consumption associated with each of the possible scenarios, (C) an amount of network signaling associated with each of the possible scenarios, (D) preferences of the content provider, (E) preferences of the content user, (F) a type of the content to be delivered, and (G) a current network load.

15. The method of claim 13, wherein
the type of content is one of a plurality of types including software updates, video or audio streaming, social network updates, rich media upload, and advertisement delivery, and
some of the plurality of possible scenarios include using one or more mechanisms such as video pacing, content deferral, de-prioritization and TCP acceleration.

16. The method of claim 15, wherein
the selected scenario includes video pacing, if the type of content is video or audio streaming, and while delivering the content, an amount of the content already delivered to the content user to exceed an amount of the content that has been played-out by the content user,
the radio states include a first state during which the content user receives the content at a first data rate and uses a first battery power, and a second state during which the content user receives the content at a second data rate and uses a second battery power, the first data rate being larger than the second data rate, and the first battery power being larger than the second battery power, and
the delivering of the content includes using the first state and the second state such as to minimize energy consumption.

17. The method of claim 15, wherein
the scenario that includes the content deferral if at least one of the following conditions is met:
a size of the content exceeds a predetermined size threshold,
a current network load exceeds a predetermined network load threshold, and
current time corresponds to a period of a day when a network usage is high, and
a network profile indicates that a current network load is high and is expected to decrease, and
when the selected scenario includes content deferral, the delivering is delayed.

18. The method of claim 15, wherein if the selected scenario includes the de-prioritization, a low priority is assigned to delivering the content.

19. The method of claim 18, wherein the scenario includes the de-prioritization if a size of the content exceeds a predetermined size threshold.

20. A computer readable medium (1030) storing executable codes which, when executed on a processor, make the processor to perform a method (1200) for controlling content delivery from a content source provider to a content user (UE) in a telecommunication network, the method (1200) comprising:
selecting (1220) a scenario from a plurality of possible scenarios, for delivering the content, the scenario being selected depending on factors including a viewer abandonment rate; and
delivering (1230) the content to the content user according to the selected scenario.

## Patentansprüche

1. Vorrichtung (130, 510, 1000), die so konfiguriert ist, dass sie das Liefern von Inhalt von einem Inhaltsquellenanbieter an einen Inhaltsbenutzer (UE) in einem Telekommunikationsnetz steuert, und umfasst:
eine Verarbeitungseinheit (132, 300, 810, 920, 1020), die so konfiguriert ist, dass sie in Abhängigkeit von Faktoren, die eine Betrachter-Aufgaberate umfassen, ein Szenario aus einer Mehrzahl von möglichen Szenarios zum Liefern des Inhalts an den Inhaltsbenutzer auswählt und den Inhalt gemäß dem ausgewählten Szenario liefert.

2. Vorrichtung nach Anspruch 1, ferner umfassend:
eine Datenspeichereinheit (TIC), die so konfiguriert ist, dass sie den Inhalt speichert, der vom Inhaltsquellenanbieter empfangen wird und gemäß dem ausgewählten Szenario an den Inhaltsbenutzer geliefert werden soll.

3. Vorrichtung nach Anspruch 1, wobei die Faktoren ferner mindestens eines von (A) einer Tageszeit, (B) einem mit jedem der möglichen Szenarios assoziierten Energieverbrauch der UE-Batterie, (C) einer mit jedem der möglichen Szenarios assoziierten Netzsignalisierungsmenge, (D) Präferenzen des Inhaltsanbieters, (E) Präferenzen des Inhaltsbenutzers, (F) einem Typ des zu liefernden Inhalts und (G) einer aktuellen Netzlast umfassen.

4. Vorrichtung nach Anspruch 1, wobei:
der Typ von Inhalt einer von einer Mehrzahl von Typen ist, welche Softwareupdates, Video- oder Audiostreaming, Aktualisierungen von sozialen Netzen, Rich-Media-Upload und Werbungszustellung umfassen, und
einige der Mehrzahl von möglichen Szenarios ein Verwenden eines oder mehrerer Mechanismen, wie beispielsweise Videogeschwindigkeit, Inhaltsverzögerung, Entpriorisierung und TCP-Beschleunigung, umfassen.

5. Vorrichtung nach Anspruch 4, wobei die Verarbeitungseinheit ferner sie konfiguriert ist, dass sie das Szenario zum Verwenden von Videogeschwindigkeit auswählt, wenn der Typ von Inhalt Video- oder Audiostreaming ist, und das Szenario derart sein soll, dass während des Lieferns des Inhalts eine Menge des Inhalts, die bereits an den Inhaltsbenutzer geliefert wurde, eine Menge des Inhalts überschreitet, die durch den Inhaltsbenutzer abgespielt wurde.

6. Vorrichtung nach Anspruch 5, wobei:
die Funkzustände einen ersten Zustand, während dessen der Inhaltsbenutzer den Inhalt bei einer ersten Datenrate empfängt und eine erste Batterieleistung verwendet, und einen zweiten Zustand umfassen, während dessen der Inhaltsbenutzer den Inhalt bei einer zweiten Datenrate empfängt und eine zweite Batterieleistung verwendet, wobei die erste Datenrate größer als die zweite Datenrate ist, und die erste Batterieleistung größer als die zweite Batterieleistung ist, und
die Verarbeitungseinheit ferner so konfiguriert ist, dass sie den Inhalt unter Verwendung des ersten Zustands und des zweiten Zustands derart verwendet, dass der Energieverbrauch minimiert wird.

7. Vorrichtung nach Anspruch 4, wobei die Verarbeitungseinheit so konfiguriert ist, dass sie das Liefern des Inhalts verzögert, wenn das ausgewählte Szenario die Inhaltsverzögerung umfasst.

8. Vorrichtung nach Anspruch 7, wobei die Verarbeitungseinheit so konfiguriert ist, dass sie das Szenario, das die Inhaltsverzögerung umfasst, gemäß einem vorbestimmten Satz von Regeln auswählt.

9. Vorrichtung nach Anspruch 7, wobei die Verarbeitungseinheit so konfiguriert ist, dass sie das Szenario, das die Inhaltsverzögerung umfasst, auswählt, wenn wenigstens eine der folgenden Bedingungen erfüllt wird:
eine Größe des Inhalts überschreitet eine vorbestimmte Größenschwelle,
eine aktuelle Netzlast, welche Mobilzellenlast umfasst, überschreitet eine vorbestimmte Netzlastschwelle, und
eine aktuelle Zeit entspricht einem Zeitabschnitt eines Tages, in welchem die Netzauslastung hoch ist.

10. Vorrichtung nach Anspruch 7, wobei die Verarbeitungseinheit ferner so konfiguriert ist, dass sie ein Netzlastprofil empfängt und das Szenario, das die Inhaltsverzögerung umfasst, auswählt, wenn das Netzprofil anzeigt, dass eine aktuelle Netzlast hoch ist und voraussichtlich abnimmt.

11. Vorrichtung nach Anspruch 4, wobei, wenn das ausgewählte Szenario die Entpriorisierung umfasst, dem Liefern des Inhalts eine niedrige Priorität erteilt wird.

12. Vorrichtung nach Anspruch 11, wobei die Verarbeitungseinheit so konfiguriert ist, dass sie ein Szenario auswählt, das die Entpriorisierung umfasst, wenn eine Größe des Inhalts eine vorbestimmte Größenschwelle überschreitet.

13. Verfahren (1200) zur Steuerung von Inhaltslieferung von einem Inhaltsquellenanbieter an einen Inhaltsbenutzer (UE) in einem Telekommunikationsnetz, umfassend:
Empfangen und Speichern (1210) von Inhalt, der vom Inhaltsquellenanbieter an den Inhaltsbenutzer geliefert werden soll;
Auswählen (1220) eines Szenarios aus einer Mehrzahl von möglichen Szenarios zum Liefern des Inhalts an den Inhaltsbenutzer, wobei das Szenario in Abhängigkeit von Faktoren ausgewählt wird, die eine Betrachter-Aufgaberate umfassen; und
Liefern (1230) des Inhalts gemäß dem ausgewählten Szenario an den Inhaltsbenutzer.

14. Verfahren nach Anspruch 13, wobei die Faktoren ferner mindestens eines von (A) einer Tageszeit, (B) einem mit jedem der möglichen Szenarios assoziierten Energieverbrauch der UE-Batterie, (C) einer mit jedem der möglichen Szenarios assoziierten Netzsignalisierungsmenge, (D) Präferenzen des Inhaltsanbieters, (E) Präferenzen des Inhaltsbenutzers, (F) einem Typ des zu liefernden Inhalts und (G) einer aktuellen Netzlast umfassen.

15. Verfahren nach Anspruch 13, wobei:
der Typ von Inhalt einer von einer Mehrzahl von Typen ist, welche Softwareupdates, Video- oder Audiostreaming, Aktualisierungen von sozialen Netzen, Rich-Media-Upload und Werbungszustellung umfassen, und
einige der Mehrzahl von möglichen Szenarios ein Verwenden eines oder mehrerer Mechanismen, wie beispielsweise Videogeschwindigkeit, Inhaltsverzögerung, Entpriorisierung und TCP-Beschleunigung, umfassen.

16. Verfahren nach Anspruch 15, wobei
das ausgewählte Szenario Videogeschwindigkeit umfasst, wenn der Typ von Inhalt Video- oder Audiostreaming ist, und während des Lieferns des Inhalts eine Menge des Inhalts, die bereits an den Inhaltsbenutzer geliefert wurde, eine Menge des Inhalts überschreitet, die durch den Inhaltsbenutzer abgespielt wurde,
die Funkzustände einen ersten Zustand, während dessen der Inhaltsbenutzer den Inhalt bei einer ersten Datenrate empfängt und eine erste Batterieleistung verwendet, und einen zweiten Zustand umfassen, während dessen der Inhaltsbenutzer den Inhalt bei einer zweiten Datenrate empfängt und eine zweite Batterieleistung verwendet, wobei die erste Datenrate größer als die zweite Datenrate ist, und die erste Batterieleistung größer als die zweite Batterieleistung ist, und
das Liefern des Inhalts ein derartiges Verwenden des ersten Zustands und des zweiten Zustands umfasst, dass der Energieverbrauch minimiert wird.

17. Verfahren nach Anspruch 15, wobei:
das Szenario die Inhaltsverzögerung umfasst, wenn wenigstens eine der folgenden Bedingungen erfüllt wird:
eine Größe des Inhalts überschreitet eine vorbestimmte Größenschwelle,
eine aktuelle Netzlast überschreitet eine vorbestimmte Netzlastschwelle, und
eine aktuelle Zeit entspricht einem Zeitabschnitt eines Tages, in welchem die Netzauslastung hoch ist,
ein Netzprofil zeigt an, dass eine aktuelle Netzlast hoch ist und voraussichtlich abnimmt, und
das Liefern verzögert wird, wenn das ausgewählte Szenario Inhaltsverzögerung umfasst.

18. Verfahren nach Anspruch 15, wobei, wenn das ausgewählte Szenario die Entpriorisierung umfasst, dem Liefern des Inhalts eine niedrige Priorität erteilt wird.

19. Verfahren nach Anspruch 18, wobei das Szenario die Entpriorisierung umfasst, wenn eine Größe des Inhalts eine vorbestimmte Größenschwelle überschreitet.

20. Computerlesbares Medium (1030), das ausführbare Codes speichert, die bei Ausführung auf einem Prozessor den Prozessor veranlassen, ein Verfahren (1200) zur Steuerung von Inhaltslieferung von einem Inhaltsquellenanbieter an einen Inhaltsbenutzer (UE) in einem Telekommunikationsnetz durchzuführen, wobei das Verfahren (1200) umfasst:
Auswählen (1220) eines Szenarios aus einer Mehrzahl von möglichen Szenarios zum Liefern des Inhalts, wobei das Szenario in Abhängigkeit von Faktoren ausgewählt wird, die eine Betrachter-Aufgaberate umfassen; und
Liefern (1230) des Inhalts gemäß dem ausgewählten Szenario an den Inhaltsbenutzer.

## Revendications

1. Appareil (130, 510, 1000) configuré pour commander une livraison de contenu d'un fournisseur de source de contenu à un utilisateur de contenu, UE, dans un réseau de télécommunications, comprenant :
une unité de traitement (132, 300, 810, 920, 1020) configurée pour sélectionner un scénario parmi une pluralité de scénarios possibles, pour la livraison du contenu à l'utilisateur de contenu, en fonction de facteurs comprenant un taux d'abandon de spectateur, et pour livrer le contenu en fonction du scénario sélectionné.

2. Appareil selon la revendication 1, comprenant en outre :
une unité de mémorisation de données (TIC) configurée pour mémoriser le contenu reçu du fournisseur de source de contenu à livrer à l'utilisateur de contenu en fonction du scénario sélectionné.

3. Appareil selon la revendication 1, dans lequel les facteurs comprennent en outre au moins l'un de : (A) un temps de la journée, (B) une consommation d'énergie de batterie de l'UE associée à chacun des scénarios possibles, (C) une quantité de signalisation de réseau associée à chacun des scénarios possibles, (D) des préférences du fournisseur de contenu, (E) des préférences de l'utilisateur de contenu, (F) un type de contenu à livrer, et (G) une charge de réseau actuelle.

4. Appareil selon la revendication 1, dans lequel le type de contenu est l'un d'une pluralité de types comprenant des mises à jour logicielles, un streaming vidéo ou audio, des mises à jour de réseaux sociaux, un chargement multimédia riche et une livraison de publicité, et
certains de la pluralité de scénarios possibles comprennent l'utilisation d'un ou plusieurs mécanismes comme une régulation de rythme de vidéo, un report de contenu, une déprioritisation et une accélération TCP.

5. Appareil selon la revendication 4, dans lequel l'unité de traitement est en outre configurée pour sélectionner le scénario pour utiliser une régulation de rythme de vidéo, si le type de contenu est un streaming vidéo ou audio, et le scénario est tel que, pendant la livraison du contenu, une quantité de contenu déjà livrée à l'utilisateur de contenu dépasse une quantité de contenu déjà lue par l'utilisateur de contenu.

6. Appareil selon la revendication 5, dans lequel
les états radio comprennent un premier état dans lequel l'utilisateur de contenu reçoit le contenu à un premier débit de données et utilise une première puissance de batterie, et un deuxième état dans lequel l'utilisateur de contenu reçoit le contenu à un deuxième débit de données et utilise une deuxième puissance de batterie, le premier débit de données étant supérieur au deuxième débit de données, et la première puissance de batterie étant supérieure à la deuxième puissance de batterie, et
l'unité de traitement est en outre configurée pour livrer le contenu en utilisant le premier état et le deuxième état de manière à minimiser la consommation d'énergie.

7. Appareil selon la revendication 4, dans lequel l'unité de traitement est configurée pour retarder la livraison du contenu si le scénario sélectionné comprend le report de contenu.

8. Appareil selon la revendication 7, dans lequel l'unité de traitement est configurée pour sélectionner le scénario qui inclut le report de contenu en fonction d'un ensemble prédéterminé de règles.

9. Appareil selon la revendication 7, dans lequel l'unité de traitement est configurée pour sélectionner le scénario qui comprend le report de contenu si au moins l'une des conditions suivantes est remplie :
une taille du contenu dépasse un seuil de taille prédéterminé,
une charge de réseau actuelle comprenant une charge de cellule mobile dépasse un seuil de charge de réseau prédéterminé, et
un temps actuel correspond à une période d'une journée au cours de laquelle une utilisation de réseau est élevée.

10. Appareil selon la revendication 7, dans lequel l'unité de traitement est en outre configurée pour recevoir un profil de charge de réseau et sélectionner le scénario qui comprend le report de contenu si le profil de réseau indique qu'une charge de réseau actuelle est élevée et est censée diminuer.

11. Appareil selon la revendication 4, dans lequel, si le scénario sélectionné comprend la déprioritisation, une basse priorité est attribuée à la livraison du contenu.

12. Appareil selon la revendication 11, dans lequel l'unité de traitement est configurée pour sélectionner un scénario comprenant la déprioritisation si une taille du contenu dépasse un seuil de taille prédéterminé.

13. Procédé (1200) pour commander une livraison de contenu d'un fournisseur de source de contenu à un utilisateur de contenu, UE, dans un réseau de télécommunications, comprenant :
la réception et la mémorisation (1210) d'un contenu à livrer à l'utilisateur de contenu à partir du fournisseur de source de contenu ;
la sélection (1220) d'un scénario parmi une pluralité de scénarios possibles, pour livrer le contenu à l'utilisateur de contenu, le scénario étant sélectionné en fonction de facteurs parmi lesquels un taux d'abandon de spectateur ; et
la livraison (1230) du contenu à l'utilisateur de contenu en fonction du scénario sélectionné.

14. Procédé selon la revendication 13, dans lequel les facteurs comprennent en outre au moins l'un de : (A) un temps de la journée, (B) une consommation d'énergie de batterie de l'UE associée à chacun des scénarios possibles, (C) une quantité de signalisation de réseau associée à chacun des scénarios possibles, (D) des préférences du fournisseur de contenu, (E) des préférences de l'utilisateur de contenu, (F) un type de contenu à livrer, et (G) une charge de réseau actuelle.

15. Procédé selon la revendication 13, dans lequel
le type de contenu est l'un d'une pluralité de types comprenant des mises à jour logicielles, un streaming vidéo ou audio, des mises à jour de réseaux sociaux, un chargement multimédia riche et une livraison de publicité, et
certains de la pluralité de scénarios possibles comprennent l'utilisation d'un ou plusieurs mécanismes comme une régulation de rythme de vidéo, un report de contenu, une déprioritisation et une accélération TCP.

16. Procédé selon la revendication 15, dans lequel
le scénario sélectionné comprend une régulation de rythme de vidéo, si le type de contenu est un streaming vidéo ou audio, et, pendant la livraison du contenu, une quantité de contenu déjà livrée à l'utilisateur de contenu dépasse une quantité de contenu déjà lue par l'utilisateur de contenu,
les états radio comprennent un premier état dans lequel l'utilisateur de contenu reçoit le contenu à un premier débit de données et utilise une première puissance de batterie, et un deuxième état dans lequel l'utilisateur de contenu reçoit le contenu à un deuxième débit de données et utilise une deuxième puissance de batterie, le premier débit de données étant supérieur au deuxième débit de données, et la première puissance de batterie étant supérieure à la deuxième puissance de batterie, et
la livraison du contenu comprend l'utilisation du premier état et du deuxième état de manière à minimiser la consommation d'énergie.

17. Procédé selon la revendication 15, dans lequel
le scénario comprend le report de contenu si au moins l'une des conditions suivantes est remplie :
une taille du contenu dépasse un seuil de taille prédéterminé,
une charge de réseau actuelle dépasse un seuil de charge de réseau prédéterminé, et
un temps actuel correspond à une période d'une journée au cours de laquelle une utilisation de réseau est élevée, et
un profil de réseau indique qu'une charge de réseau actuelle est élevée et est censée diminuer, et
lorsque le réseau sélectionné comprend le report de contenu, la livraison est retardée.

18. Procédé selon la revendication 15, dans lequel, si le scénario sélectionné comprend la déprioritisation, une basse priorité est attribuée à la livraison du contenu.

19. Procédé selon la revendication 18, dans lequel le scénario comprend la déprioritisation si une taille du contenu dépasse un seuil de taille prédéterminé.

20. Support lisible par ordinateur (1030) mémorisant des codes exécutables qui, lorsqu'ils sont exécutés sur un processeur, amènent le processeur à effectuer le procédé (1200) pour commander une livraison de contenu d'un fournisseur de source de contenu à un utilisateur de contenu, UE, dans un réseau de télécommunications, le procédé (1200) comprenant :
la sélection (1220) d'un scénario parmi une pluralité de scénarios possibles, pour livrer le contenu, le scénario étant sélectionné en fonction de facteurs parmi lesquels un taux d'abandon de spectateur ; et
la livraison (1230) du contenu à l'utilisateur de contenu en fonction du scénario sélectionné.
